(19) **Europäisches Patentamt / European Patent Office / Office européen des brevets**

(11) **EP 3 078 973 A1**

(12) **EUROPEAN PATENT APPLICATION**

(43) Date of publication:
**12.10.2016 Bulletin 2016/41**

(51) Int Cl.:
**G01Q 40/00** (2010.01)　　　　**G01Q 60/32** (2010.01)

(21) Application number: **15163207.2**

(22) Date of filing: **10.04.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicants:
• **Consejo Superior de Investigaciones Cientificas (CSIC)**
**28006 Madrid (ES)**
• **Delft University Of Technology**
**2628 CN Delft (NL)**

(72) Inventors:
• **Fraxedas Calduch, Jordi**
**08193 Cerdanyola del Vallès  (Barcelona) (ES)**
• **Perez-Murano, Francesc**
**08193 Cerdanyola del Vallès  (Barcelona) (ES)**
• **Staufer, Urs**
**2628 CN Delft (NL)**
• **Rull Trinidad, Enrique**
**2628 CN Delft (NL)**

(74) Representative: **Pons**
**Glorieta Ruben Dario 4**
**28010 Madrid (ES)**

(54) **METHOD FOR MONITORING RADIUS AND SHAPE VARIATIONS OF ATOMIC FORCE MICROSCOPE CANTILEVER TIPS AND DEVICE THEREOF**

(57)　A method for monitoring radius and shape variations of the cantilever tips of atomic force microscopes AFM, the method envisages several embodiments and aspects of the invention aimed to the solve the problem of monitoring and assessing the shape of tips of cantilevers used in AFM. The method hereby described is applicable for the amplitude modulation mode of operation of an atomic force microscopes and based in the relationship between the tip characteristics and the de- termining the condition of the radius of the tip from the amplitude of at least one nth(s) harmonic wherein higher intensity of the value of the amplitude of the nth(s) harmonic implies higher values of the radius of the tip.

FIG. 1

EP 3 078 973 A1

**Description**

**OBJECT OF THE INVENTION**

The invention is directed to the technical field of atomic force microscopy.

A method is provided for monitoring the variations of the tip of the cantilevers used in AFM systems.

**BACKGROUND OF THE INVENTION**

Since its invention in 1986, one of the main challenges in atomic force microscopy is the monitoring of the tip radius, which determines the precision of the images acquired with the microscope. Several methods have been proposed, but most of them rely on an ex-situ characterization of the tip radius or are based on complex experimental procedures that are not of general use. Some of them are briefly described herein:

Tip-surface interactions.

The motion of the tip at the end of a rectangular microcantilever in the proximity of a surface can be obtained by solving the one-dimensional Euler-Bernoulli equation:

$$EI\ \frac{\partial^4}{\partial x^4}\left[w(x,t)+\ a\ \frac{\partial w(x,t)}{\partial t}\right]+\ m\ \frac{\partial^2 w(x,t)}{\partial t^2}=F_{exc}+F_{hyd}+F_{ts} \qquad (Eq.1)$$

where $w(x,t)$ represents the transverse displacement of the cantilever beam with respect to the x beam direction, $E$, $I$ and m are the Young's modulus, moment of inertia and mass per unit length of the cantilever, respectively, and a stands for the internal damping of the cantilever. $F_{exc}$, $F_{hyd}$ and $F_{ts}$ represent the excitation, medium hydrodynamic damping and tip-surface interaction forces, respectively. $F_{exc}$ includes the drive frequency, $F_{hyd}$ can be ignored when operating in air and different tip-sample interaction models are available for $F_{ts}$ depending on the degrees of complexity. One of the mostly used is the Derjaguin-Muller-Toporov (DMT) contact model, which combines the classical Hertz model (repulsive) with van der Waals interactions (attractive), under the assumption of low adhesion and with deformations smaller than the tip radius $R$:

$$F_{ts}(z)=\begin{cases}-\dfrac{HR}{[6(z-z_s)^2]}, & z-z_s\geq a_0 \\[2em] -\dfrac{HR}{6a_0^2}+\dfrac{4}{3}E^*\sqrt{R}(a_0-z+z_s)^{3/2}, & z-z_s<a_0\end{cases} \qquad (Eq.2)$$

where $z\text{-}z_s$ is the tip-sample distance, $A_0$ and H are the intermolecular distance and Hamaker constant, respectively, and $E^*$ is the reduced Young's modulus:

$$\frac{1}{E*}=\ \frac{1-v_t^2}{E_t}+\ \frac{1-v_s^2}{E_s} \qquad (Eq.\ 3)$$

where $E_t$ ($v_t$) and $E_s$ ($v_s$) stand for the tip and surface Young's modulus (Poisson's ratio), respectively. Since equations (1) and (2) cannot be solved analytically, numerical solutions have to be obtained. For the freely oscillating cantilever ($F_{exc}+F_{hyd}+F_{ts}$ =0), the solution of equation (1) can be expressed in terms of the flexural eigenmodes.

Tip wear and its monitoring.

Tip wear is intimately related to the operation of an AFM. Initially sharp tips become more or less modified by the contact with the surfaces under study thus changing irreversibly their shape and condition with time. Tip-induced effects, including both the damaging of the tip and of the explored surface, are concerns as old as AFM itself, so that several strategies have been developed in order to monitor the tip state or protect it by making it more robust.

A long list of studies on wear during contact mode can be found in the literature. Several of them are devoted to the reduction of wear by using wear-resistant carbon-based (diamond-like) tips. However, the continuous monitoring of the tip state has been systematically studied only recently. The abrasive wear of sharp silicon tips in situ sliding over large distances (hundreds of meters) on polymeric surfaces and the quantitative increase on the tip radius has been rationalized in terms of an atom-by-atom loss process; however, this approach has to be considered as quasi continuous since the value of the tip radius is obtained after taking adhesion curves, requiring the interruption of the scan. Another approach is based on constant resonance force microscopy, where the tip is brought into contact with a surface and either the cantilever or the surface is vibrated over a frequency range that excites a flexural resonance in the cantilever. Due to the tip-sample interactions, the contact resonance of a given eigenmode will be shifted to higher frequencies compared to the free air resonance and the contact stiffness (proportional to the contact radius) can be obtained during scanning.

Amplitude modulation (AM)-AFM was implemented with the aim to strongly reduce tip wear, eliminating the shear stresses acting on the tip due to sliding, through the intermittent contact. However, such reduction is only partial because of the high frequency oscillations (below 1 MHz). Thus, tip wear can still be a problem even in the gentle AM-AFM mode. This is an important point for tip-based manufacturing technologies and metrology involving AM-AFM operation since wear must be avoided in order to provide commercially viable processes. The first alternative, already pointed out for the contact mode case, is to reduce wear by using different tip materials. Wear has been modelled as an irreversible thermally activated atom-by-atom mass transfer from the sample to the tip as a result of adhesive interactions. A methodology to prevent tip wear by carefully choosing the experimental conditions (probe and free oscillation amplitude) prior to AM-AFM experiments was reported; this was achieved by calculating the maximum repulsive force and contact stress building stress maps that can be used as a guide to choose appropriate cantilevers and free oscillation amplitudes: operating with a maximum compressive stress below (above) the yield strength of the tip material prevents (triggers) tip blunting.

Use of higher harmonics

During the approach of the oscillating cantilever to a surface the transition from the attractive (van der Waals) regime to the repulsive (contact) regime triggers the generation of higher harmonics as a result of the nonlinear interactions, as shown in equation (Eq.2), and can be amplified by the flexural eigenmodes of the cantilever. Then, images can be acquired at harmonics with sufficiently large amplitudes or approach curves can be registered at such amplitudes, provided either internal or external lock-in amplifiers are used.

## DESCRIPTION OF THE INVENTION

One aspect of the invention is directed to a method for monitoring of the radius of a cantilever tip of an atomic force microscope based on the dynamical response of higher harmonics, which are enhanced within the repulsive region of the tip-surface interaction in the amplitude modulation (AM-AFM) operational mode.

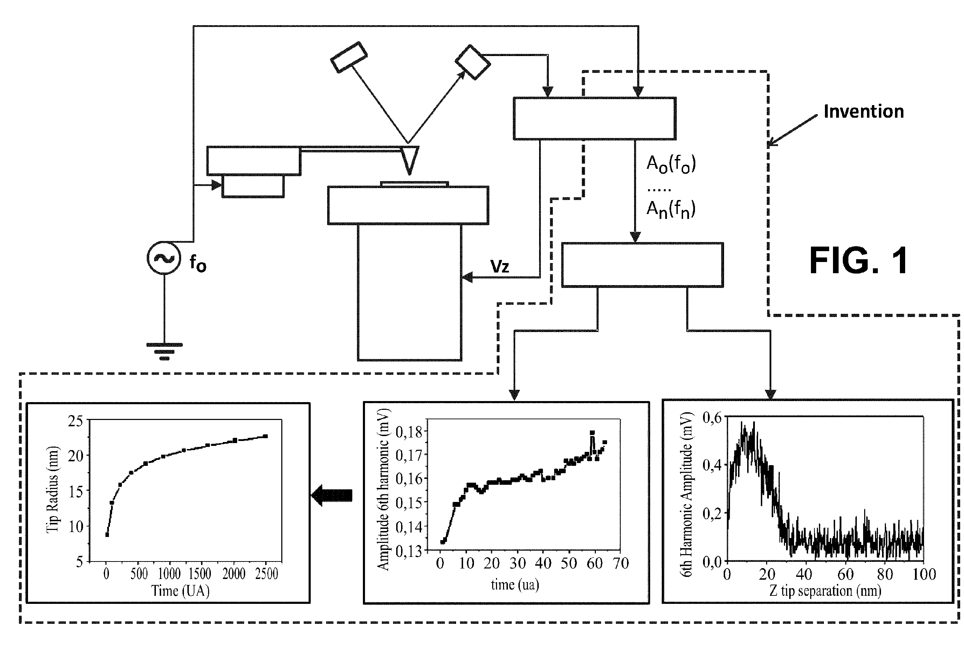

The method for monitoring the evolution of the radius of a cantilever tip is applicable for the amplitude modulation mode of operation of an atomic force microscope. The following description is made for standard cantilevers used in amplitude modulation dynamic AFM mode but it may be of general application to other cantilever types (e.g., triangular) and operational modes of the AFM that involves bringing the cantilever into its mechanical resonance. The details of the invention can be found in Fig. 1.

i. The cantilever chip is a small microfabricated piece that contains the AFM cantilever (micrometer size) with an integrated tip, all attached to a substrate that allows its manipulation. The cantilever chip is placed in the AFM cantilever holder. The detection system of the AFM is usually based on a combination of a laser beam and photodiode, where the light reflected on the backside of the cantilever is detected in the position-sensitive photodiode detector. However, laser-free detection systems, such as those using piezoresistive cantilevers, are also at hand and the invention here described can be also applied to them. The out-of-plane oscillation of the cantilever is excited using different mechanisms, e.g., mechanically with a piezoelectric transducer located at the cantilever holder and thermally.

ii. The signal of the AFM detector that reflects the out-of-plane oscillation of the cantilever is processed by the AFM control electronics. Usually, this signal is the input of a lock-in amplifier that uses the signal to the piezoelectric transducer as a reference signal.

iii. The fundamental oscillation eigenmode $f_0$ is determined using the specific software of the used instruments. Tapping-mode cantilevers may have many resonances, in this case a resonance of approximately 350 kHz was considered. At this stage the free oscillation amplitude $A_0$ is selected by adjusting the amplitude of the signal that feeds the transducer. It is strongly recommended, as it is the common practice in AFM operation, to stabilize the AFM instrument and electronics in order to reduce drift as much as possible.

iv. The next step consists in acquiring topographic AFM images of the sample surface in amplitude modulation mode for general inspection and fine tuning of the AFM feed-back parameters. The $A_0$ and set-point ($A_{sp}$) values are selected according to the specific instrument, cantilever and sample types, environmental conditions (e.g., relative humidity), etc. avoiding tip crash during approach.

v. The method which is the object of this invention relies on the registration of the amplitude (An) of the out-of-plane oscillation of the cantilever at a frequency $f_n$ corresponding to a higher harmonic of the fundamental eigenmode $f_0$. For this matter it is required to use an additional internal or external lock-in amplifier. The input and reference signals are the same than the ones used in the main lock-in amplifier. The amplitude of the higher harmonic (An), once processed, is what provides information about the tip radius.

vi. The main lock-in amplifier provides the values of the amplitude and phase of the fundamental oscillation mode. This information is required in order to tune the oscillation conditions (free and set-point amplitudes) in a condition that the signal from the higher harmonic is optimal. However, the method object of this invention is appropriate for multiple values of free and set-point amplitudes.

vii. For the monitoring of the evolution of the tip radius, two acquisition modes can be employed.

viii. The acquisition mode 1 is based on the displacement of the sample surface towards the tip (or the tip towards the sample, depending on the specific AFM set-up employed) using the AFM z piezoelectric transducers or equivalent systems for z-displacement and simultaneously measuring the amplitude of the selected higher harmonic (An) (10). Since the intensities of the higher harmonics decrease for increasing n values ($\sim n^{-2}$), the best chance is to measure those harmonics in resonance with the cantilever's flexural eigenmodes. For a 350 kHz cantilever, the second eigenmode (6.27x350=2.2 MHz) is in close resonance with the sixth harmonic (6x350=2.1 MHz).

ix. The sequence of steps that allows for the acquisition mode 1 is the following:

    a. The scanning of the AFM tip over the surface is stopped at a pre-defined and previously selected position
    b. The feedback control of the tip-surface interaction is disabled
    c. The tip is separated from the surface to a distance at which no surface interaction between tip and surface is detected
    d. The tip is approached towards the surface (or vice-versa) until the amplitude of the oscillation at the frequency of the 1st oscillation mode is reduced until a certain value, said value being dependent on the AFM probe and the characteristics of the sample. During the approach, the amplitude and phase of the first mode, and the amplitude of the nth(s) harmonic is acquired and recorded.
    e. Then, the tip is retracted from the surface (or vice versa) to the original separation. During retraction, the amplitude and phase of the first mode, and the amplitude of the nth(s) harmonic is acquired and recorded.
    f. After the previous steps, the feedback control is enabled and the scanning can start again to acquire AFM images, until it is desired to monitor the state of the tip again by repeating the process.

x. The phase of the 1st oscillation mode provides information about the interaction between tip and surface, mainly if the interaction forces that dominate are mainly attractive or repulsive. This information is important in order to define the conditions under which the information from the amplitude of the sixth harmonic is obtained.

xi. The amplitude of the nth(s) harmonic provides information about the tip radius. This information can be obtained from the maximum value of the amplitude of the nth harmonic or from the slope of the curve of the amplitude of the nth harmonic as a function of tip-sample distance. Details of this are shown in next section.

xii. The second acquisition mode 2 consists of simultaneously and continuously acquiring the amplitude of the selected higher harmonic (An) with the usual topographic AFM image. In this way, a continuous monitoring of the amplitude of the harmonic is obtained, and as a consequence, a continuous monitoring of the tip radius variation. A possible steps sequence is the following:

    A. An area of the sample is selected for scanning. Uniform areas of low roughness are specially suitable, but the method may be applicable to any area
    B. During the scanning, several signals can be acquired at every point of the image. Usually, the signals acquired are the z-position of the tip (topography), amplitude and phase of the 1st oscillation mode, and the amplitude(s) of the nth(s) harmonics.
    C. Once the image is acquired, they are processed. For monitoring the evolution of the tip radius, information is provided by the image corresponding to the amplitude of the nth harmonics. One way of processing this image is by calculating the average value of the amplitude in the whole image, and repeating the process for several consecutive images. In this way, the change of amplitude (and so, of the tip radius) can be obtained with higher resolution,

xiii. If we consider $A_6$, then its intensity increases for increasing values of the tip radius. This is valid for all harmonics, but those out-of-resonance harmonics cannot be observed due to their very low amplitudes (below 0.01 nm). Thus, by keeping control of the evolution of $A_6$ one can monitor the evolution of the tip radius. This strategy is only valid if the $A_0$ and $A_{sp}$ values are maintained constant during the experiments.

xiv. The relationship between amplitude of one the higher harmonics, preferably the 6th harmonic, and tip radius is obtained by modelling the interaction of the tip with the surface.

Another aspect of the invention is an atomic forces microscopy device comprising a control unit operative to carry out the method of the first aspect of the invention.

DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

Figure 1.- Shows a scheme of the experimental implementation, where the invention section is highlighted.

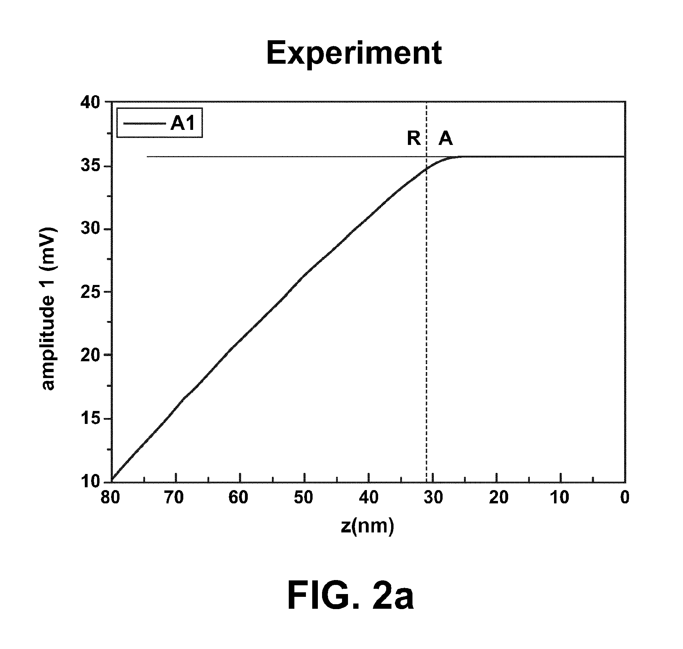

Figures 2a-2f.- Show a series of graphs depicting experimental determination of the response of higher harmonics. Curves (a), (b) and (c) are obtained simultaneously by approaching the tip towards the surface. (2a) Amplitude of the fundamental mode of the cantilever oscillation. (2b) Phase of the fundamental mode. (2c) Amplitude of the 6th, 7th and 8th harmonic. Experiments are performed with an AFM cantilever with k= 45 N/m, resonance frequency of 350 kHz. The surface is polystyrene (3 GPa Young's modulus). (d-f) Result of the modeling using the VEDA code.

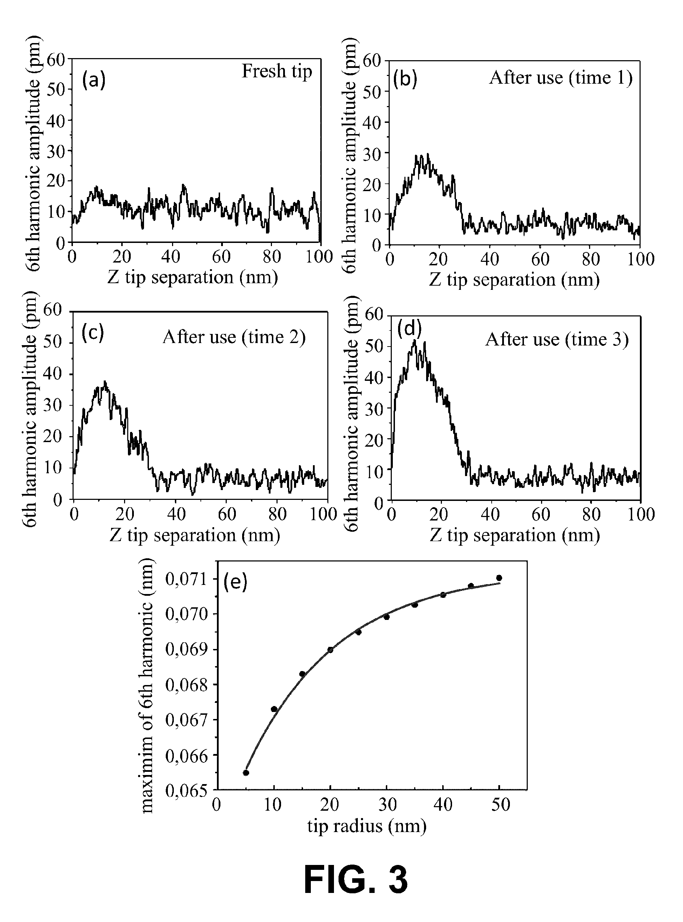

Figures 3a- 3e. Figures 3a, 3b,3c and 3d respectively show a series of graphs depicting the evolution of the amplitude of the 6th harmonic as a function of the wearing of the tip. K=44 N/m silicon cantilever and silicon substrate. Figure 3 shows a graph representing the result of the modelling of the simulation to determine the relationship between the change of radius and the change of oscillation amplitude of the 6th harmonic. The parameters used in the simulations are: $A_0$=44 nm, k=44 N/m, Q=614, $f_0$=293 kHz.

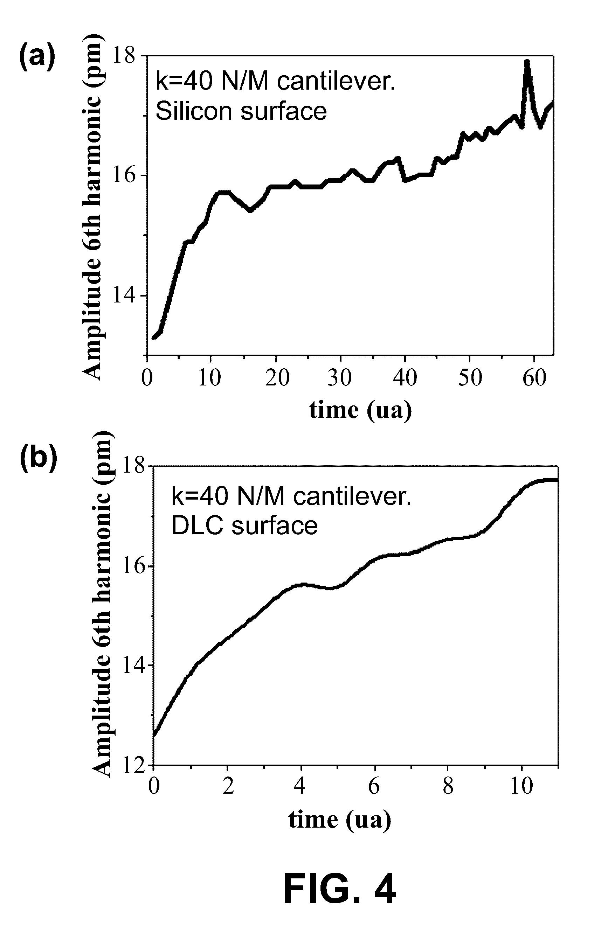

Figures 4a, 4b.- Show a series of graphs respectively depicting two different examples of the variation of the 6th harmonic while continuously performing images.

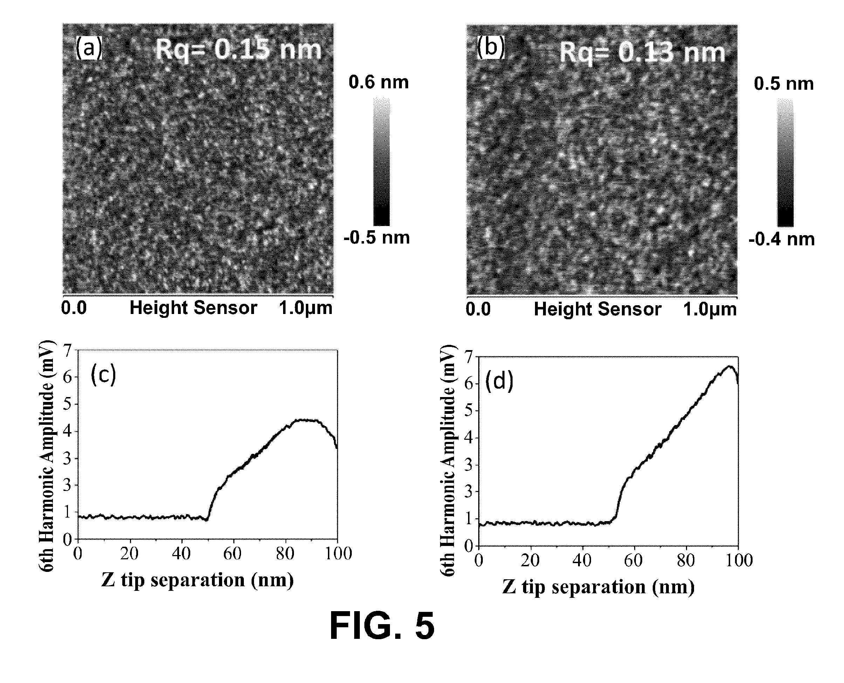

Figures 5a-5d.- Depicts examples of the correlation between the resulting AFM image and the evolution of the 6th harmonic. The experiment is performed using cantilevers with elastic force constant of k = 3.1 N/m and fundamental frequency of 74.46 kHz. The surface imaged is silicon.Figures 5.a and 5.b are topographic AFM images, being figure 5.b obtained after having being scanning with the tip over the same area for a long time. As the tip-radius becomes largers, the apparent roughness of the surface decreases. Figures 5.c and 5.d shows the value of the oscillation amplitude of the 6th harmonic as a function of the tip-surface average separation, obtained inmmediately afeter Figures 5.a and 5.b respectivey. The increase of the amplitude of the 6th harmonic in figure5.d reveals that the tip-radius has increased.

**PREFERRED EMBODIMENT OF THE INVENTION**

In a preferred embodiment of the invention a method for monitoring radius and shape variations of atomic force microscope cantilever tips is described the said method comprises the following steps:

- Exciting the tip so that oscillations are generated on a cantilever where the tip is integrated, said excitation being generated by means of a transducer associated to the cantilever.
- Determining the fundamental oscillation eigenmode $f_0$ of the cantilever.
- Selecting a free oscillation amplitude $A_0$ by adjusting the amplitude of a signal feeding the transducer.
- Acquiring topographic AFM images of at least a surface of a sample in amplitude modulation.
- Providing values of amplitude and phase of a fundamental oscillation mode of the cantilever.
- Registering a value of amplitude (An) of the out-of-plane oscillation of the cantilever at a frequency fn corresponding to at least one higher harmonic of the fundamental eigenmode $f_0$.
- Setting the distance comprised between the tip and the sample to a first distance value where tip-surface interaction is detectable, determined by a variation of the value of the oscillation amplitude of the first eigenmode.
- Measuring the amplitude of the at least one selected higher harmonic (An) of the cantilever,in a preferred embodiment the frequency of at least one of the selected higher harmonic (An) is close to the resonance frequency of one of the cantilever flexural eigenmodes, so that the amplitude of the corresponding harmonic is enhanced by the flexural eigenmode resonances of the cantilever.

- Stopping scanning of the AFM tip over the surface, at a pre-defined position if the surface is highly heterogenous.
- Disabling feedback control of the tip-surface interaction.
- Increasing the distance comprised between the tip and the sample to a second distance value where no surface interaction between tip and surface is detected, where the value of the oscillation amplitude of the first eigenmode is $A_0$.
- Reducing the distance comprised between the tip and the sample until the amplitude of the oscillation at the frequency of the 1st oscillation mode is reduced down to a target value.
- Increasing the distance comprised between the tip and the sample to the first distance value,
- Determining the condition of the radius of the tip from the amplitude of at least one nth(s) harmonic wherein higher intensity of the value of the amplitude of the nth(s) harmonic implies higher values of the radius of the tip.

In an aspect of the invention where the AFM is being operated in air in the amplitude modulation mode, wherein the resonance frequency of the fundamental eigenmode of the cantilever is, for example, comprised within the range of 50 kHz - 400 kHz, with the second eigenmode and the sixth harmonic located at 6.27 times and 6 times this resonance frequency, respectively. In another aspect of the invention where the AFM is being operated in vacuum the resonance frequency of the cantilevers are the appropriate for operation in vacuum. Last, in those aspects of the invention where where the AFM is being operated in a liquid, the resonance frequency of the cantilevers are those appropriate for operation in liquid.

In another aspects of the invention the method hereby described may further comprise the acquisition of the amplitude and phase of the first mode, and the amplitude of at least one of the nth(s) harmonic during the step of reducing the distance comprised between the tip and the sample until the amplitude of the oscillation at the frequency of the 1st oscillation mode is reduced down to a target value.

The method hereby described also envisages the possibility of enabling feedback control and scanning to acquire AFM images.

In an alternative embodiment of the invention the method for monitoring radius and shape variations of atomic force microscope tips, comprises the following steps:

- Exciting the tip so that oscillations are generated on a cantilever where the tip is integrated, said excitation being generated by means of a transducer associated to the cantilever.
- Determining a fundamental oscillation eigenmode $f_0$ of the cantilever.
- Selecting a free oscillation amplitude $A_0$ by adjusting the amplitude of a signal feeding the transducer.
- Acquiring topographic AFM images of at least a surface of a sample in amplitude modulation.
- Providing values of amplitude and phase of a fundamental oscillation mode of the cantilever, and registering a value of amplitude (An) of the out-of-plane oscillation of the cantilever at a frequency fn corresponding to at least one higher harmonic of the fundamental eigenmode $f_0$.
- Setting the average distance comprised between the tip and the sample to a first distance value where the tip-surface interaction is detectable, determined by a certain decrease of the oscillation amplitude of the first eigenmode.
- Measuring the amplitude of at least one selected higher harmonic (An) of the cantilever,
- Simultaneously and continuously acquiring the amplitude of a selected higher harmonic (An) with at least one topographic AFM image, and
- Determining the condition of the radius of the tip from the amplitude of at least one nth(s) harmonic wherein higher intensity of the value of the amplitude of the nth(s) harmonic implies higher values of the radius of the tip.

In any of the preferred or alternative embodiments of the method hereby described further comprising an intermediate calibration of the tip radius by other methods, that comprises a quantification of the tip radius said calibration of the tip radius being carried out using a calibration sample, that comprises a quantification of the tip radius.

Finally, the quantification of the tip radius is performed by SEM characterization and the method is validated by means of numerical simulations and experiments.

Force-distance curves for different radii.

First, the validation of the method is carried out by analyzing the response of the cantilever vibration when approaching the tip towards the sample. This experiment is easy to perform with commercial AFM systems.

Numerical simulations are performed using the Virtual Environment for Dynamic AFM (VEDA) simulator, an open-source simulation tool delivered through the nanoHUB cloud computing cyber-infrastructure (www.nanohub.org). The DMT model shown in equation (2) has been chosen to calculate force distance curves and analyze how they evolve for different tip radii.

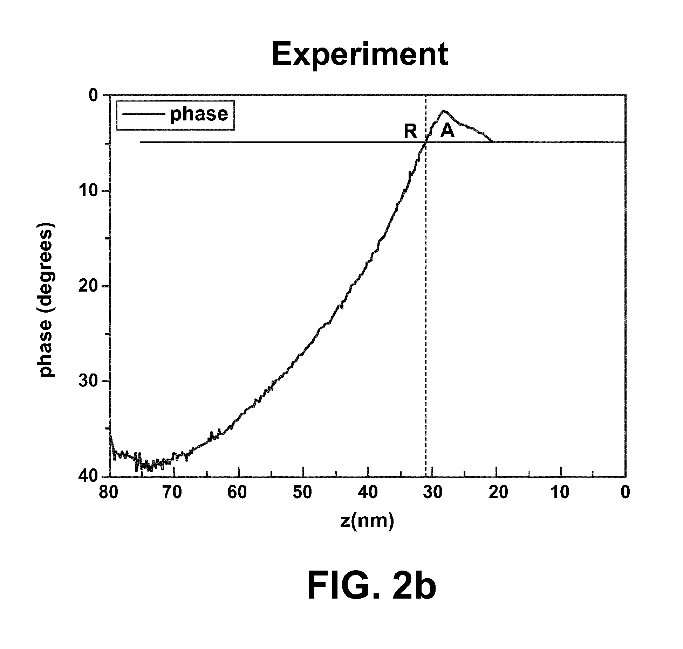

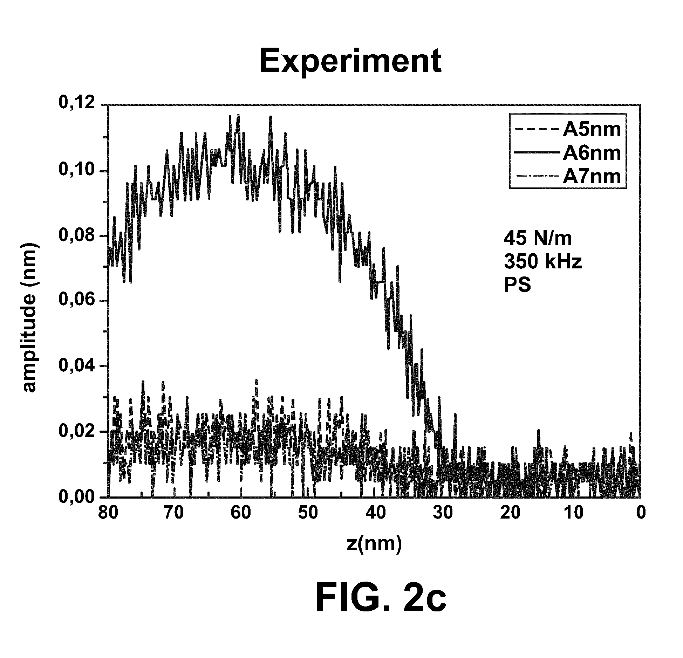

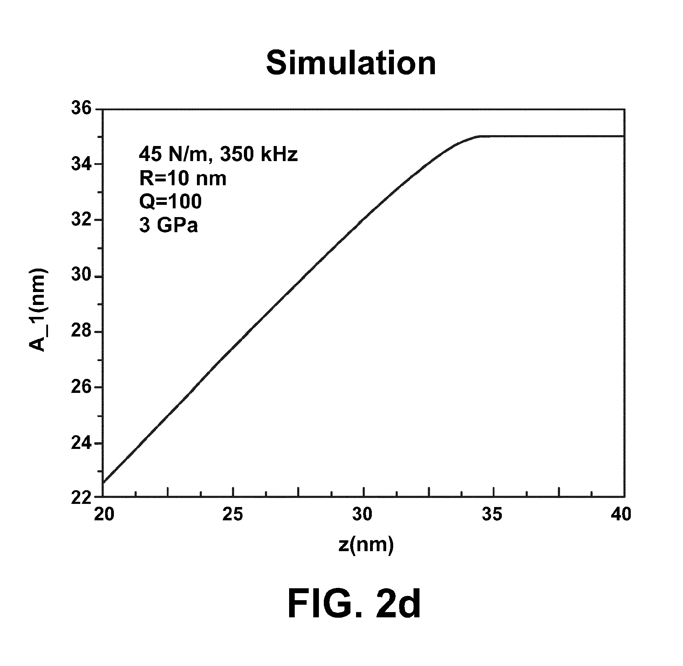

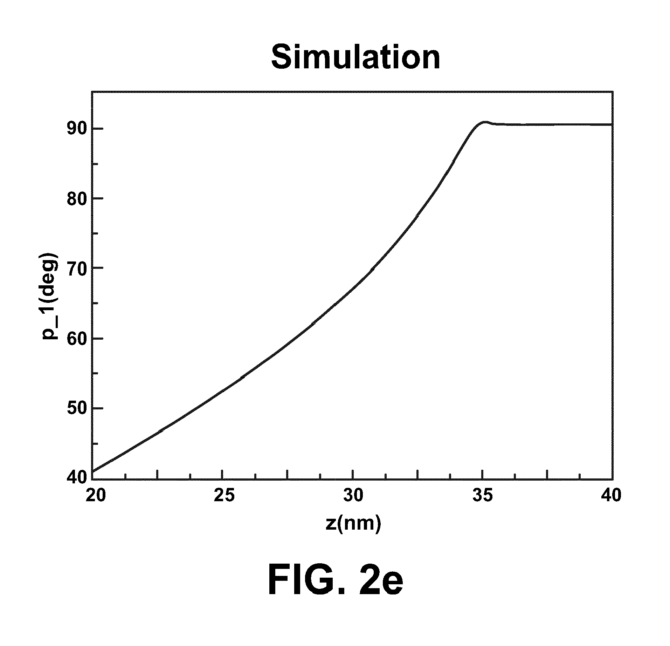

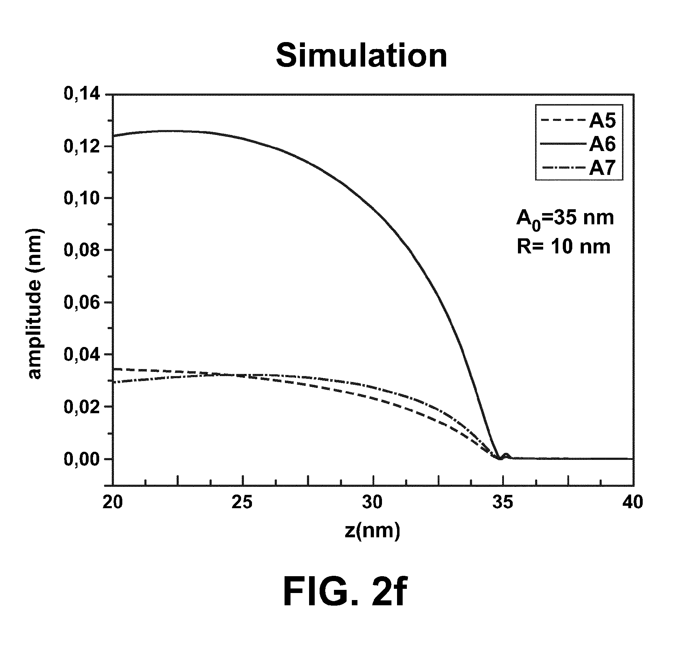

Figure 2 shows the calculated amplitudes of the fundamental mode (Figure 2.d) and the 5th, 6th and 7th harmonics (Figure 2.f) as a function of the variation of distance between a polystyrene (PS) sample (Young's modulus of 3 GPa and a silicon tip, assuming a 10 nm tip radius for a 45 N/m and 350 kHz cantilever. From the figure we observe that the amplitudes of all harmonics increase when the tip sample distance is below a certain value, corresponding to the onset of the tip-surface repulsive region, and that the highest amplitude corresponds to the 6th harmonic (n=6), which is in close resonance with the second flexural mode (6.27 times the fundamental resonance frequency), and that the relative ratios dependent on the distance. This initial calculation is necessary to proof the validity of the chosen application and conditions. The phase of the signal of the fundamental mode is also shown (Figure 2.e) to determine if the AFM is operated in the attractive or repulsive modes.

The experiments corresponding to the simulated response have been performed using an ICON AFM from Bruker. The built in capabilities of the systems for the measurements, including the internal lock-in amplifiers and software to perform approach/retract curves have been used. All the experiments have been performed in ambient air with a relative humidity around 30 %. The results of this experiments are shown in Figure 2 (a to c), and they follow closely the results of the simulations.

In Figure 3 (a to d), the evolution of the 6th harmonic at several times of a continuous use of the tip imaging a silicon surface is shown. It can be observed that the maximum of the amplitude of the 6th harmonic increases as the AFM tip is being more used. As all the parameters of the experiment (free oscillation amplitude, free set-point amplitude, surface area, humidity, etc) are kept constant, the change of the maximum amplitude of the 6th harmonic can only be attributed to the change of the tip radius.

The relationship between the change of the amplitude of the 6th harmonic and the tip radius is obtained from numerical simulations, and the result is shown in Figure 3.e. The parameters used in the simulations are given in the caption to the figure. It can be concluded that the change of the 6th harmonic amplitude is compatible with a change of the tip radius of tens of nanometers, being more sensitive the method for small tip radius.

Figure 4 (a and b) shows examples of continuous monitoring of the variation of the tip radius. In this case, the amplitude of the 6th harmonic is continuously monitored and averaged after the acquisition of each single image. The continuous increase of the amplitude is attributed to the increase of the tip radius.

Figure 5 reveals the relevance of this invention to validate roughness measurements of surfaces from AFM images. In this case, the roughness of a silicon surface is measured by performing images of a same area (same location) of 1 $\mu$m $\times$ 1 $\mu$m. Image (a) shows a higher rms value and more defined features than image (b). In the same way, the maximum of the 6th harmonic amplitude presents a lower value after acquiring image (a) (Figure 5.c) than after acquiring image (b) (Figure 5.d). It is known that the tip radius drastically influences the rms roughness values obtained from AFM images, and this experiments exemplifies that we can corroborate the decrease of the rms roughness from an increase of the tip radius, revealed by an increase of the 6th harmonic amplitude.

**Claims**

1. Method for monitoring radius and shape variations of atomic force microscope cantilever tips, comprising the following steps:

   - exciting the tip so that oscillations are generated on a cantilever where the tip is integrated, said excitation being generated by means of a transducer associated to the cantilever,
   - determining the fundamental oscillation eigenmode $f_0$ of the cantilever,
   - selecting a free oscillation amplitude $A_0$ by adjusting the amplitude of a signal feeding the transducer,
   - acquiring topographic AFM images of at least a surface of a sample in amplitude modulation,
   - providing values of amplitude and phase of a fundamental oscillation mode of the cantilever, and
   - registering a value of amplitude (An) of the out-of-plane oscillation of the cantilever at a frequency fn corresponding to at least one higher harmonic of the fundamental eigenmode $f_0$,

   being the method **characterized by** comprising:

   a. setting the distance comprised between the tip and the sample to a first distance value where tip-surface interaction is detectable, determined by a variation of the value of the oscillation amplitude of the first eigenmode,
   b. measuring the amplitude of the at least one selected higher harmonic (An) of the cantilever,
   c. stop scanning of the AFM tip over the surface,
   d. disabling feedback control of the tip-surface interaction,
   e. increasing the distance comprised between the tip and the sample to a second distance value where no surface interaction between tip and surface is detected, where the value of the oscillation amplitude of the first eigenmode is $A_0$,

f. reducing the distance comprised between the tip and the sample until the amplitude of the oscillation at the frequency of the 1st oscillation mode is reduced down to a target value.

g. Increasing the distance comprised between the tip and the sample to the first distance value,

h. determining the condition of the radius of the tip from the amplitude of at least one nth(s) harmonic wherein higher intensity of the value of the amplitude of the nth(s) harmonic implies higher values of the radius of the tip.

2. Method according to claim1 wherein the frequency of at least one of the selected higher harmonic (An) is close to the resonance frequency of one of the cantilever flexural eigenmodes, so that the amplitude of the corresponding harmonic is enhanced by the flexural eigenmode resonances of the cantilever.

3. Method according to claim 2 where the AFM is operated in air in the amplitude modulation mode, being the method **characterized by** the resonance frequency of the fundamental eigenmode of the cantilever being comprised within the range of 50 kHz - 400 kHz, with the second eigenmode and the sixth harmonic located at 6.27 times and 6 times this resonance frequency, respectively.

4. Method according to claim 2 where the AFM is operated in vacuum, being the method **characterized by** the resonance frequency of the cantilevers are the appropriate for operation in vacuum

5. Method according to claim 2 where the AFM is operated in a liquid, being the method **characterized by** the resonance frequency of the cantilevers are the appropriate for operation in liquid

6. Method according to claim 1 or 2 further comprising the acquisition of the amplitude and phase of the first mode, and the amplitude of at least one of the nth(s) harmonic during step f.

7. Method according to any of preceding claims further comprising enabling feedback control and scanning to acquire AFM images.

8. Method for continuous monitoring radius and shape variations of atomic force microscope tips, comprising the following steps:

- exciting the tip so that oscillations are generated on a cantilever where the tip is integrated, said excitation being generated by means of a transducer associated to the cantilever,
- determining a fundamental oscillation eigenmode $f_0$ of the cantilever,
- selecting a free oscillation amplitude $A_0$ by adjusting the amplitude of a signal feeding the transducer,
- acquiring topographic AFM images of at least a surface of a sample in amplitude modulation,
- providing values of amplitude and phase of a fundamental oscillation mode of the cantilever, and
- registering a value of amplitude (An) of the out-of-plane oscillation of the cantilever at a frequency fn corresponding to at least one higher harmonic of the fundamental eigenmode $f_0$,

being the method **characterized by** comprising:

a. setting the average distance comprised between the tip and the sample to a first distance value where the tip-surface interaction is detectable, determined by a decrease of the oscillation amplitude of the first eigenmode,
b. measuring the amplitude of at least one selected higher harmonic (An) of the cantilever,
c. simultaneously and continuously acquiring the amplitude of a selected higher harmonic (An) with at least one topographic AFM image, and
d. determining the condition of the radius of the tip from the amplitude of at least one nth(s) harmonic wherein higher intensity of the value of the amplitude of the nth(s) harmonic implies higher values of the radius of the tip.

9. Method according to any one of claims 1 to 8 further comprising a calibration of the tip radius.

10. Method according to claim 9 wherein the calibration of the tip radius is carried out using a calibration sample, that comprises a quantification of the tip radius.

11. Method according to claim 9 wherein the quantification of the tip radius is performed by SEM characterization.

**12.** Method according to claim 1 wherein the stop of scanning of step c) is carried out at a pre-defined position when the surface is heterogeneous.

**13.** Atomic force microscopy device comprising a control unit operative to carry out the method described in any one of claims 1 to 12.

**Invention**

$A_o(f_o)$

.....

$A_n(f_n)$

$V_z$

$f_o$

**FIG. 1**

# Experiment

## FIG. 2a

# Experiment

**FIG. 2b**

**Experiment**

FIG. 2c

## Simulation

45 N/m, 350 kHz
R=10 nm
Q=100
3 GPa

## FIG. 2d

# Simulation

**FIG. 2e**

FIG. 2f

FIG. 3

**(a)**

k=40 N/M cantilever.
Silicon surface

**(b)**

k=40 N/M cantilever.
DLC surface

# FIG. 4

FIG. 5

Europäisches
Patentamt

European
Patent Office

Office européen
des brevets

# EUROPEAN SEARCH REPORT

Application Number

EP 15 16 3207

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CARLO MARAGLIANO ET AL: "Effective AFM cantilever tip size: methods for determination", MEASUREMENT SCIENCE AND TECHNOLOGY, IOP, BRISTOL, GB, vol. 26, no. 1, 24 November 2014 (2014-11-24), page 15002, XP020276348, ISSN: 0957-0233, DOI: 10.1088/0957-0233/26/1/015002 [retrieved on 2014-11-24] * figures 1,2 * * paragraph [02.1] * | 1-13 | INV. G01Q40/00 G01Q60/32 |
| A | SANTOS SERGIO ET AL: "A method to provide rapid determination of tip radius in dynamic atomic force microscopy", REVIEW OF SCIENTIFIC INSTRUMENTS, AIP, MELVILLE, NY, US, vol. 83, no. 4, 1 April 2012 (2012-04-01), pages 43707-43707, XP012162216, ISSN: 0034-6748, DOI: 10.1063/1.4704376 [retrieved on 2012-04-24] * paragraph [II.B] * | 1-13 | |
| A | US 2014/230103 A1 (SU CHANMIN [US] ET AL) 14 August 2014 (2014-08-14) * figure 34 * * paragraph [0206] * | 1-13 | |

TECHNICAL FIELDS SEARCHED (IPC)

G01Q

-/--

The present search report has been drawn up for all claims

| Place of search | Date of completion of the search | Examiner |
|---|---|---|
| Berlin | 18 September 2015 | Polesello, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 15 16 3207

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAMANAKA KAZUSHI ET AL: "Nanoscale elasticity measurement with in situ tip shape estimation in atomic force microscopy", REVIEW OF SCIENTIFIC INSTRUMENTS, AIP, MELVILLE, NY, US, vol. 71, no. 6, 1 June 2000 (2000-06-01), pages 2403-2408, XP012038340, ISSN: 0034-6748, DOI: 10.1063/1.1150627 * the whole document * | 1-13 | |

TECHNICAL FIELDS
SEARCHED      (IPC)

The present search report has been drawn up for all claims

| Place of search | Date of completion of the search | Examiner |
|---|---|---|
| Berlin | 18 September 2015 | Polesello, Paolo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 16 3207

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2015

| Patent document cited in search report | Publication date | Patent family member(s) | Publication date |
|---|---|---|---|
| US 2014230103 A1 | 14-08-2014 | US 2012131702 A1<br>US 2014230103 A1 | 24-05-2012<br>14-08-2014 |

EPO FORM P0459

For more details about this annex : see Official Journal of the European Patent Office, No. 12/82